# EUROPEAN PATENT APPLICATION

(11) **EP 1 396 991 A1**
(43) Date of publication of application: **10.03.2004**
(21) Application number: 03017200.1
(22) Date of filing: 29.07.2003
(51) Int. Cl.: H04N 1/00, H04L 12/28, H04N 1/21, H04N 1/387

(54) **Imaging apparatus which sends images over WLAN to print service**

(30) Priority: 29.07.2002 JP 2002219960; 29.07.2002 JP 2002219961
(71) Applicant: Fuji Photo Film Co., Ltd., Kanagawa-ken (JP)
(72) Inventor: Iida, Takayuki, Fuji Photo Film Co., Ltd., Ashigarakami-gun, Kanagawa-ken (JP)
(74) Representative: Klunker . Schmitt-Nilson . Hirsch

(57) **Abstract**

Impressions at the time of obtaining image data by photography with an imaging apparatus such as a digital camera can be lead directly to a printing order. The image data obtained by the digital camera are displayed on a display means, and stored in a data memory as selected image data by pressing a transfer confirmation button in the case of placing a printing order regarding the image data. When the digital camera enters a communicable range of wireless LAN communication equipment, communication means that carries out wireless LAN communication sends the selected image data via a wireless LAN to an addressee that carries out printing.

## Description

### BACKGROUND OF THE INVENTION

### Field of the Invention

The present invention relates to an imaging apparatus such as a digital camera that obtains image data by photography and enables transmission of the image data to an image server or the like, and to a data communication apparatus that reads the image data from the imaging apparatus and enables transmission of the image data to an image server or the like.

The present invention also relates to an imaging apparatus that obtains image data by photography and is preferable for carrying out an operation for generating printed matter from the image data.

### Description of the Related Art

An imaging apparatus such as a digital camera enables display of an image to be photographed or that has been photographed, on a liquid crystal display monitor installed therein. By displaying the image on the liquid crystal display monitor in the above manner, an angle of view or brightness of a subject to be photographed can be confirmed, and the image that has been photographed can be checked. Since a digital camera records image data in a recording medium, a much larger number of images can be photographed than in the case of photography with a conventional film camera using a silver salt photographic film for recording images. Moreover, the image data that have been recorded can be deleted. Therefore, an image can be re-photographed as many times as a photographer wishes, which leads to easier acquisition of an image that satisfies the photographer.

A digital photograph service system has also been proposed wherein a printing order is placed regarding an image obtained by a digital camera. In such a system, order information representing the content of an order is generated while image data are displayed on a liquid crystal display monitor of a digital camera, and the order information is sent together with the image data to a laboratory where printing of the image data is carried out. The image data can be moved from the digital camera to a personal computer with which the order information can be generated. In such a digital photograph service system, prints can be obtained as in the case of using a conventional silver salt photographic film.

However, an operation of ordering printing regarding image data obtained by a digital camera is troublesome in such a digital photograph service system. Especially, in the case of placing a printing order with use of a digital camera, an operation of selecting an image to be printed is extremely troublesome since a liquid crystal display monitor thereof is small.

Meanwhile, since a film camera is used for photography on the premise that printing is carried out by using a silver salt photographic film, a photographed scene such as a scene to be recorded or a scene that emotionally moves a photographer is always printed.

On the other hand, as has been described above, deletion of image data obtained by photography is easy for a digital camera. Therefore, even in the case where a scene to be recorded or a scene that emotionally moved a photographer was photographed, image data are often deleted since the photographer often forgets how he/she felt at the time of photography when he/she views the image after a while. However, once such image data have been deleted, the impression he/she had at the time of photography cannot be recorded as a print.

For this reason, a method has been proposed (Japanese Unexamined Patent Publication No. 2000-175092) for sending image data to a designated addressee immediately after photography so as to generate a print that reminds a photographer of an impression at the time of photography. However, in this method, all image data that have been obtained are sent, which means that image data whose printing is not desired are also sent and printed.

### SUMMARY OF THE INVENTION

The present invention has been conceived based on consideration of the above circumstances. An object of the present invention is therefore to easily link an impression at the time of photography to a printing order of image data needed by a photographer.

A first imaging apparatus of the present invention comprises:
image capturing means for obtaining image data;
image selection means for selecting a desired portion of the image data to be sent to an addressee that generates printed matter therefrom; and
image storage means for storing the image data obtained by the imaging means and the portion of the image data selected by the image selection means as selected image data.

The printed matter includes not only a print, a photograph album, and a postcard but also a T-shirt having an image printed thereon, and a recording medium such as a CD-R recorded with the image data.

The first imaging apparatus of the present invention may further comprise:
communication means for carrying out data communication with wireless communication equipment such as a wireless LAN;
addressee storage means for storing the addressee;
authentication information storage means for storing authentication information that is necessary for the data communication with the wireless communication equipment; and
control means for carrying out judgment as to whether or not the communication means is within a communicable range of the wireless communication equipment and for controlling the communication means so as to send the authentication information stored in the authentication information storage means to the wireless communication equipment by carrying out the data communication with the wireless communication equipment in the case where a result of the judgment is affirmative and so as to send the selected image data to the addressee via the wireless communication equipment after the wireless communication equipment authenticates the imaging apparatus according to the authentication information.

At least the communication means may be installed in a dedicated chip that is detachable from the imaging apparatus. Furthermore, the authentication information storage means and/or the addressee storage means may be installed in the chip together with the communication means.

The communication means carries out the data communication via the wireless LAN, and is assumed to have a data transfer speed of 8~11 MB per second or more and a fixed communications charge.

The wireless LAN communication equipment is according to an IEEE (Institute of Electrical and Electronic Engineers) standard, for example. More specifically, the wireless LAN communication equipment preferably uses a standard such as IEEE 802.11a and IEEE 802.11b. The standard IEEE 802.11b is a mainstream standard using a 2.4 GHz band and having a data transfer speed of up to 11 Mbps. The standard IEEE 802.11a uses a 5.0 GHz band and has a data transfer speed of up to 54 Mbps. A standard IEEE 802.11g using a 2.4 GHz band and having a data transfer speed of up to 54 Mbps has also been proposed.

The wireless LAN communication equipment is preferably installed in a busy place such as a railroad station, a bus stop, a municipal office, a bank, a convenience store, a fast food restaurant, and a downtown area, or in an Internet café, for example. It is preferable for the wireless LAN communication equipment to enable communication with the imaging apparatus while the imaging apparatus is moving, by using a roaming function.

The authentication information refers to ESS-ID, for example. ESS-ID is the ID adopted by the international standard IEEE 802.11 for wireless LAN, and is necessary for establishing a connection to a fixed communication partner. The communication means of the imaging apparatus and the wireless LAN communication equipment have the same ESS-ID. ESS-ID is case sensitive, and comprises 32 1-byte characters or less. More specifically, a MAC address (Media Access Control address) can be used as the ESS-ID.

It is preferable for the data communication with the wireless LAN communication equipment to adopt WEP (Wired Equivalent Privacy). WEP is a function for improving security by setting an encryption key to a wireless packet. If WEP is adopted, communication becomes possible only in the case where the WEP set by the communication means of the imaging apparatus agrees with the WEP set by the wireless LAN communication equipment.

A data communication apparatus of the present invention is a data communication apparatus connected to the imaging apparatus of the present invention and sends the selected image data to the addressee by reading the selected image data from the image storage means, and the data communication apparatus comprises:
communication means for carrying out data communication with wireless LAN communication equipment via a wireless LAN;
addressee storage means for storing the addressee;
authentication information storage means for storing authentication information necessary for carrying out the data communication with the wireless LAN communication equipment via the wireless LAN; and
control means for controlling the communication means so as to send the authentication information stored in the authentication information storage means to the wireless LAN communication equipment by carrying out the data communication with the wireless LAN communication equipment and so as to send the selected image data to the addressee via the wireless LAN communication equipment after the wireless LAN communication equipment authenticates the data communication apparatus according to the authentication information.

The data communication apparatus is installed in a communicable range of the wireless LAN communication equipment. The data communication apparatus can take any form such as a data reading cable comprising wireless LAN communication equipment so as to enable reading of the image data by connection to the imaging apparatus and transmission thereof to the wireless LAN communication equipment via the wireless LAN. A cradle having a function of recharging the imaging apparatus is preferably used as the data communication apparatus having the function of reading the image data from the imaging apparatus and the function of sending the image data via the wireless LAN.

The data communication apparatus of the present invention may further comprise recharging means for recharging the imaging apparatus.

According to the first imaging apparatus of the present invention, the image data obtained by the imaging means are stored in the image storage means. At this time, the portion of the image data selected by the image selection means so as to be sent to the addressee for generating the printed matter is stored as the selected image data in the image storage means. Therefore, since the portion of the image data from which the printed matter is to be generated is stored in the image storage means as the selected image data different from the remaining image data, a photographer can easily select the portion of the image data to be used for generating the printed matter after photography, and can easily recognize later what portion of the image data is used for printing at the time of image confirmation.

If the imaging apparatus comprises the communication means, the authentication information storage means, the addressee storage means, and the control means, the authentication information stored in the authentication information storage means is sent to the wireless LAN communication equipment by data communication with the wireless LAN communication equipment. In the case where the wireless LAN communication equipment has authenticated the imaging apparatus according to the authentication information, the selected image data are sent to the addressee via the wireless LAN communication equipment. The addressee receives the selected image data and generates the printed matter based on the selected image data.

Therefore, the selected image data from which the printed matter is to be generated are sent to the addressee through the wireless LAN via the wireless LAN communication equipment if the photographer only moves to the communicable range of the wireless LAN communication equipment while carrying the imaging apparatus. Consequently, if the photographer selects the portion of the image data with use of the image selection means after photography of a scene he/she wished to record or was emotionally moved by, the selected image data can be sent to the addressee by simple movement of the photographer to the communicable range of the wireless LAN communication equipment. The printed matter can then be generated, based on the selected image data. In this manner, the photographer can generate the printed matter that reminds him/her of an impression at the time of photography without carrying out a troublesome operation such as selection from a plurality of images.

By installing the communication means in the dedicated chip that is detachable from the imaging apparatus, the selected image data can be sent by data communication with the wireless LAN communication equipment after simple attachment of the chip to the imaging apparatus. Furthermore, using a plurality of digital cameras becomes easy if the chip is used.

According to the data communication apparatus of the present invention, the authentication information stored in the authentication information storage means is sent to the wireless LAN communication equipment by data communication with the wireless LAN communication equipment. If the wireless LAN communication equipment authenticates the data communication apparatus according to the authentication information, the selected image data stored in the image storage means of the imaging apparatus of the present invention are sent to the addressee via the wireless LAN communication equipment. The addressee receives the selected image data and generates the printed matter based on the selected image data.

Therefore, the selected image data from which the printed matter is generated are sent to the addressee via the wireless LAN communication equipment through the wireless LAN as in the case of the imaging apparatus described above if a photographer connects the imaging apparatus to the data communication apparatus. Consequently, if the photographer selects the portion of the image data with use of the image selection means after photography of a scene he/she wished to record or was emotionally moved by, the selected image data can be sent to the addressee by simple connection of the imaging apparatus to the data communication apparatus. The printed matter can then be generated based on the selected image data. In this manner, the photographer can generate the printed matter that reminds him/her of an impression at the time of photography without carrying out a troublesome operation such as selection from a plurality of images.

By installing the recharging means in the imaging apparatus, the imaging apparatus can be recharged while the selected image data are sent. Since recharging the imaging apparatus is necessarily carried out, if the selected image data are set to be sent during recharging, a user of the imaging apparatus can send the selected image data during the operation that is necessarily carried out daily, without carrying out a specific operation for sending the selected image data. In this manner, the user is less burdened regarding transmission of the selected image data.

A second imaging apparatus of the present invention comprises:
Image capturing means for obtaining image data;
image selection means for selecting a desired portion of the image data as selected image data for generating printed matter therefrom;
image storage means comprising a first storage area for storing the selected image data and a second storage area for storing the remaining image data; and
image output means for outputting the selected image data to an external apparatus that generates the printed matter, by reading the selected image data from the first storage area.

The image data includes not only still image data representing a still image but also image data representing a frame extracted from moving image data representing a moving image.

In the second imaging apparatus, the printed matter includes not only a print, a photograph album, and a postcard but also a T-shirt having an image printed thereon, and a recording medium such as a CD-R recorded with the image data. The printed matter of the moving image data refers to printed matter generated from still image data representing one frame in the moving image data.

The external apparatus refers to an apparatus that generates the printed matter, such as an image server installed in a DPE store.

In the second imaging apparatus of the present invention, it is preferable for the image output means to carry out data communication with wireless LAN communication equipment via a wireless LAN connected to a system that generates the printed matter.

The image output means may output the selected image data to a data communication apparatus that carries out data communication with wireless LAN communication equipment.

The data communication apparatus is installed in a communicable range of the wireless LAN communication equipment. The data communication apparatus can take any form such as a data reading cable comprising wireless LAN communication equipment as long as the data communication apparatus can read the image data by establishing a connection to the imaging apparatus and can send the image data to the wireless LAN communication equipment via the wireless LAN. The data communication apparatus is preferably a cradle having a function of recharging the imaging apparatus as well as functions of reading the image data from the imaging apparatus and sending the image data via the wireless LAN.

If the data communication apparatus further comprises recharging means for recharging the imaging apparatus, the data communication apparatus can send the selected image data to the wireless LAN communication equipment while recharging the imaging apparatus.

The second imaging apparatus of the present invention may further comprise:
image processing means for obtaining processed image data by carrying out image processing on the remaining image data stored in the second storage area of the image storage means. In this case, the image selection means may receive selection as the selected image data from the remaining image data from which the processed image data have been generated.

It is preferable for the image processing to be almost the same as image processing carried out on image data in a DPE store so that the image processing carried out in the DPE store can be simulated by the second imaging apparatus of the present invention.

The second imaging apparatus of the present invention may further comprise:
communication means for sending the remaining image data stored in the second storage area in the image storage means to external image processing means that obtains processed image data by carrying out image processing on the image data, and for receiving the processed image data. In this case,
the image selection means may receive selection regarding the selected image data from the remaining image data from which the processed image data have been generated.

In the second imaging apparatus of the present invention, the image output means may delete the selected image data from the first storage area in the image storage means after outputting the selected image data.

The second imaging apparatus of the present invention may further comprise thumbnail image generation means for generating thumbnail image data of the selected image data and for storing the thumbnail image data in the image storage means.

The thumbnail image data may be stored in the first or second storage area in the image storage means. Alternatively, a storage area different from the first and second storage areas may be generated to store the thumbnail image data therein.

A size of a thumbnail image represented by the thumbnail image data may be changeable.

The second imaging apparatus of the present invention may further comprise:
order information generation means for generating order information representing the content of an order regarding the selected image data. In this case,
the image output means may output the order information together with the selected image data.

In this case, the second imaging apparatus may further comprise order information storage means for storing the order information after the selected image data have been sent.

According to the second imaging apparatus of the present invention, the image data obtained by the imaging means are stored in the image storage means. At this time, the portion of the image data selected by the image selection means for generation of the printed matter is stored as the selected image data in the first storage area in the image storage means while the remaining image data are stored in the second storage area in the image storage means. The selected image data stored in the first storage area are sent to the external apparatus by the image output means for generation of the printed matter therefrom. Therefore, if a photographer only selects the portion of the image data used for printed matter generation after photography, the image output means sends the selected image data to the external apparatus. In this manner, by simply selecting the image data to be used for printed matter generation, the photographer can easily output the selected image data to the external apparatus, and can easily obtain the printed matter generated from the selected image data.

If the second imaging apparatus of the present invention comprises the image processing means, the image processing means carries out the image processing on the image data stored in the second storage area in the image storage means, and the processed image data are obtained. If the photographer wishes to generate printed matter after confirmation of the processed image data, the image data from which the processed image data have been generated are selected and stored as the selected image data in the first storage area in the image storage means. Therefore, even if the photographer did not wish to generate the printed matter from the image data immediately after photography but wishes to generate the printed matter after confirmation of desired image quality obtained as a result of the image processing, the image data can be sent to the external apparatus for the printed matter generation after selection thereof.

If the second imaging apparatus of the present invention comprises the communication means, the second imaging apparatus sends the image data stored in the second storage area to the external image processing means by using the communication means, and the image processing means obtains the processed image data. If the photographer wishes to generate the printed matter after confirmation of the processed image data, the image data from which the processed image data have been obtained are selected and stored as the selected image data in the first storage area in the image storage means. Therefore, even if the photographer did not wish to generate the printed matter from the image data immediately after photography but wishes to generate the printed matter after confirmation of desired image quality obtained as a result of the image processing, the image data can be sent to the external apparatus for the printed matter generation by newly selecting the image data. Furthermore, since the imaging apparatus does not have the image processing means, a configuration of the imaging apparatus can be simple.

Furthermore, if the image output means in the second imaging apparatus can delete the selected image data from the first storage area after outputting the selected image data, the first storage area can store more selected image data after transmission of the selected image data. In this manner, the photographer can continue photography, and can select more image data for printed matter generation.

If the second imaging apparatus has the thumbnail image generation means for generating the thumbnail image data, the thumbnail image data are generated and stored in the image storage means. Therefore, the photographer can easily confirm what portion of the image data has been sent for printed matter generation by referring to the thumbnail image data even after deletion of the selected image data from the first storage area.

If the second imaging apparatus has the order information generation means, the order information representing the content of the order is sent together with the selected image data. Therefore, the order can be placed easily for generating the printed matter from the selected image data.

If the second imaging apparatus has the order information storage means, the order information is stored therein. Therefore, by referring to the order information stored in the order information storage means, the content of the order can be easily confirmed even after transmission of the selected image data.

### BRIEF DESCRIPTION OF THE DRAWINGS

Figure 1 is a block diagram showing a configuration of a digital camera adopting an imaging apparatus of a first embodiment of the present invention;
Figure 2 is an oblique rear view of the digital camera in the first embodiment;
Figure 3 is a block diagram showing a configuration of a network printing system;
Figure 4 is a flow chart showing procedures carried out at the time of photography with the digital camera in the first embodiment;
Figure 5 is a flow chart showing procedures carried out at the time of sending selected image data;
Figure 6 is a flow chart showing procedures carried out in a broadband town after reception of the selected image data;
Figure 7 is a flow chart showing procedures carried out in a broadband satellite after reception of the selected image data;
Figure 8 is a block diagram showing a configuration of a digital camera adopting an imaging apparatus of a second embodiment of the present invention;
Figure 9 is a block diagram showing a configuration of a digital camera adopting an imaging apparatus of a third embodiment of the present invention;
Figure 10 is a flow chart showing procedures carried out at the time of photography with the digital camera in the third embodiment;
Figure 11 is a block diagram showing a configuration of a digital camera adopting an imaging apparatus of a fourth embodiment of the present invention;
Figure 12 is a block diagram showing a configuration of a digital camera adopting an imaging apparatus of a fifth embodiment of the present invention;
Figure 13 is a flow chart showing procedures for classifying image data after photography with the digital camera in the fifth embodiment;
Figure 14 is a flow chart showing procedures carried out on image data stored in a second storage area;
Figure 15 is a flow chart showing procedures for processing moving image;
Figure 16 is a flow chart showing procedures carried out in the digital camera in the fifth embodiment after transmission of selected image data; and
Figure 17 is a block diagram showing a configuration of a digital camera adopting an imaging apparatus of a sixth embodiment of the present invention.

### DESCRIPTION OF THE PREFERRED EMBODIMENTS

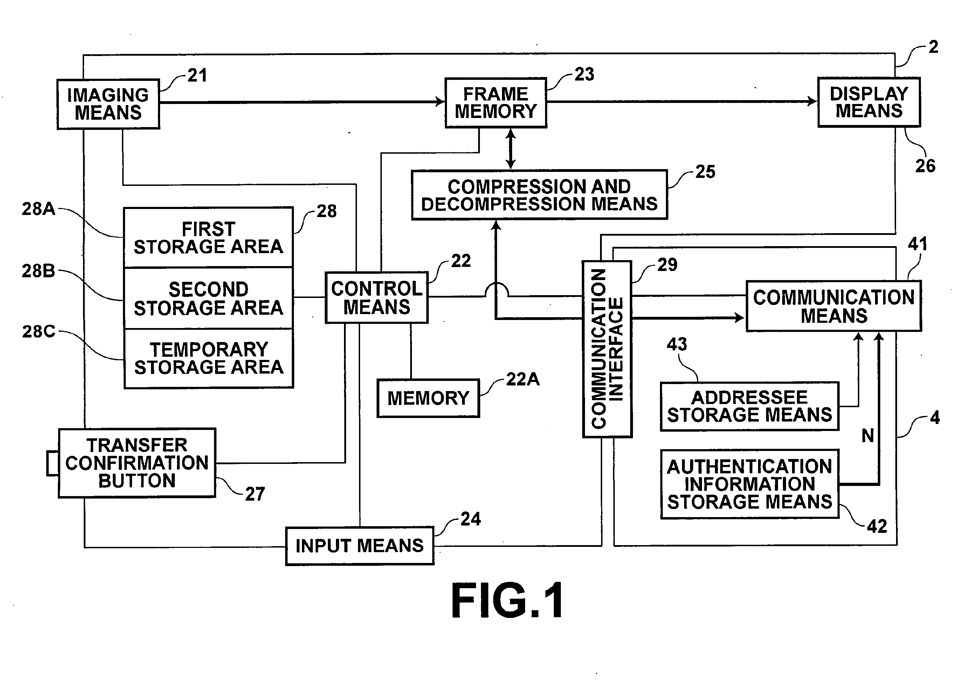

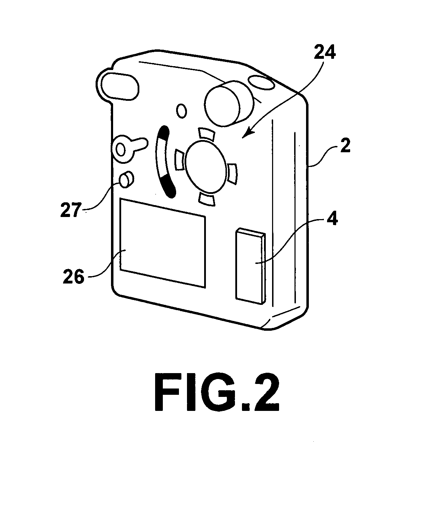

Hereinafter, embodiments of the present invention will be explained with reference to the accompanying drawings. Figure 1 is a block diagram showing a configuration of a digital camera adopting an imaging apparatus of a first embodiment of the present invention, and Figure 2 is a perspective view of the rear of the digital camera. As shown in Figures 1 and 2, a digital camera 2 comprises imaging means 21, control means 22, a frame memory 23, input means 24, compression and decompression means 25, display means 26, a transfer confirmation button 27, a data memory 28, and a communication interface 29. The imaging means 21 obtains image data sets S0 representing images of subjects by photography thereof. The control means 22 controls the entire digital camera 2. The control means 22 also controls recording, transmission, and display of the image data sets S0, and generates order information C describing the content of an order regarding the image data sets S0. The frame memory 23 stores the image data sets S0 for display thereof. The input means 24 comprises a release button, a communication button, a transmission button, a cross key, and number keys for inputting a phone number. The compression and decompression means 25 compresses the image data sets S0 according to a format such as JPEG, and decompresses the compressed image data sets. The display means 26 comprises a liquid crystal display monitor and the like for displaying various kinds of information such as the image data sets S0. The transfer confirmation button 27 is used at the time of photography of each of the image data sets S0 for confirming an intension of transfer thereof to an addressee that will be explained later with which a printing order is placed. The data memory 28 stores the image data sets S0 and selected image data sets S1. The communication interface 29 is used for connecting a communication chip 4 for communication with wireless LAN communication equipment at the time of sending the selected image data sets S1 as will be explained later.

The communication chip 4 comprises communication means 41 for carrying out data communication with the wireless LAN communication equipment in a network printing system that will be explained later via a wireless LAN, authentication information storage means 42 for storing authentication information N that is necessary for communicating with the wireless LAN communication equipment and information on the digital camera 2, and addressee storage means 43 for storing the URL of the addressee of the selected image data sets S1.

The imaging means 21 comprises a lens, a zoom mechanism, a shutter, and a CCD chip. The imaging means 21 obtains the image data sets S0 representing the images of the subjects by photographing the subjects with use of the shutter.

The control means 22 is connected to a memory 22A comprising a ROM that stores an operation program and a RAM that acts as storage means which is a work area at the time of execution of the program.

A user of the digital camera 2 as a photographer presses the transfer confirmation button 27 during display on the display means 26 of one of the image data sets S0 immediately after photography thereof, in the case where the user wishes to place a printing order regarding the displayed image data set. In this manner, the image data set S0 recorded in the frame memory 23 immediately after photography is stored as one of the selected image data sets S1 in the data memory 28. The printing order refers to not only outputting a print but also recording the selected image data sets S1 in a recording medium such as a CD-R and storage thereof in an image server of the network printing system.

By pressing the transfer confirmation button 27, the user can set the content of the printing order regarding the selected image data set S1 by using the input means 24. For example, the selected image data set S1 can be printed and stored in the image server of the network printing system or recorded in a recording medium such as a CD-R. In the case of printing, the user inputs a print size, a quantity, and the type of printing (such as postcard generation or album printing) by using the input means 24. After the content of the printing order has been set, the order information C describing the content of the order is generated by the control means 22 and stored in the data memory 28 together with the selected image data set S1. The content of the order can be input in an order content input screen displayed on the display means 26. The order information C may be generated as a file for each of the selected image data sets S1. Alternatively, only one file for the order information C may be generated so that the content of a printing order can be added thereto every time the selected image data set S1 is newly specified.

The data memory 28 comprises a first storage area 28A for storing the selected image data sets S1 and a second storage area 28B for storing the remaining image data sets S0 whose printing is not carried out, and a temporary storage area 28C for storing the image data sets S0 regarding which the user has not decided to place a printing order or to store in the digital camera 2.

The selected image data sets S1 confirmed by pressing the transfer confirmation button 27 are stored in the first storage area 28A, and the image data sets S0 whose storage in the digital camera 2 has been decided are stored in the second storage area 28B. The image data sets S0 whose printing has not been decided by the user are stored in the temporary storage area 28C. The user instructs storage of the image data sets S0 in the second storage area 28B or in the temporary storage area 28C by using the input means 24.

The communication means 41 of the communication chip 4 is used for data communication with the wireless LAN communication equipment in the network printing system via the wireless LAN, and has a speed of 8~11 Mbps or more. The communication means 41 is according to an IEEE 802.11b standard, as in the case of the wireless LAN communication equipment.

The authentication information storage means 42 stores the authentication information N that is needed by the communication means 41 for communication with the wireless LAN communication equipment, and the information on the digital camera 2.

The authentication information N adopts ESS-ID corresponding to the MAC address of the wireless LAN communication equipment, and WEP for encryption. The same WEP is used for the wireless LAN communication equipment.

The information on the digital camera 2 refers to a model name thereof. The information may also include a photography condition used at the time of photography of the image data sets S0. By sending the information including the model name and the photography condition to the network printing system together with the selected image data sets S1, image processing according to the model of the digital camera 2 and according to the photography condition can be carried out on the image data sets S1 in a mini-laboratory or the like installed in a DPE store of the network printing system.

The addressee storage means 43 stores the URL of the addressee to which the selected image data sets S1 are sent. More specifically, the URL of the DPE store in the network printing system is stored in the addressee storage means 43. The URL stored in the addressee storage means 43 is referred to when the selected image data sets S1 are sent to the addressee.

The URLs of a plurality of addressees may be stored in the addressee storage means 43 so that the user can select one of the addressees to which the selected image data sets S1 are sent.

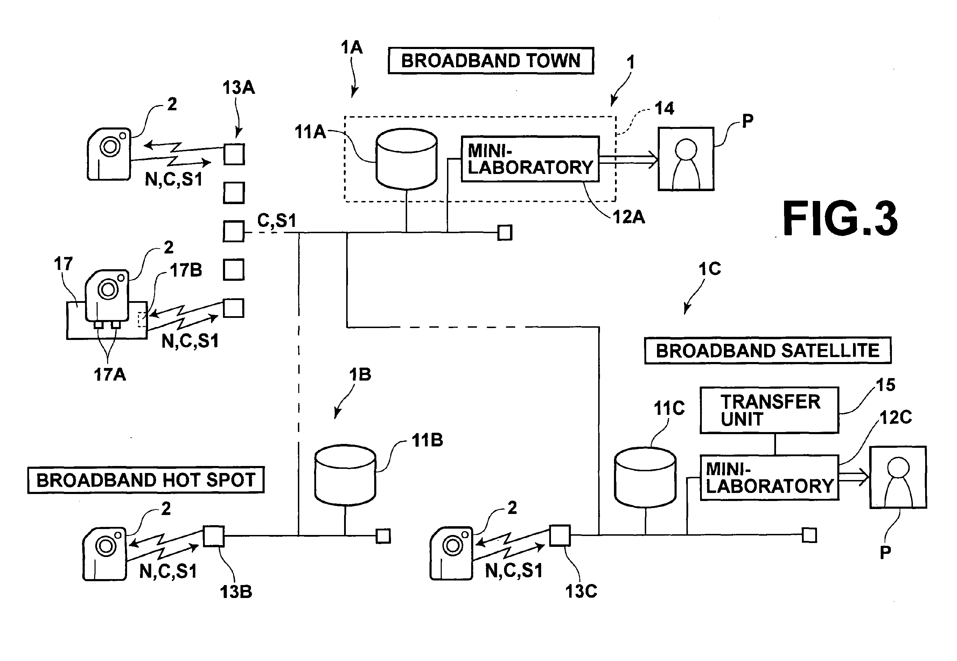

Figure 3 is a block diagram showing a configuration of the network printing system. A network printing system 1 in Figure 3 is used for providing printing services regarding the selected image data sets S1 that were obtained by the digital camera 2 and selected for printing.

As shown in Figure 3, the network printing system 1 comprises a broadband town 1A, a broadband hot spot 1B, and a broadband satellite 1C. The network printing system 1 may comprise a plurality of broadband hot spots 1B and broadband satellites 1C.

The broadband town 1A comprises a large-capacity image server 11A for storing the selected image data sets S1 a mini-laboratory 12A for generating prints P based on the selected image data sets 81 and for recording the selected image data sets 81 in a recording medium such as a CD-R, and a plurality of pieces of wireless LAN communication equipment 13A. The image server 11A, the mini-laboratory 12A, and the wireless LAN communication equipment 13A are networked via a wired LAN. The broadband town 1A is installed in an area where a DPE store 14 can provide the printing services.

The image server 11A and the mini-laboratory 12A are installed in the DPE store 14 that runs the network printing system 1.

The mini-laboratory 12A reads the selected image data sets S1 stored in the image server 11A according to the content of the printing orders described in the order information C sent from the digital camera 2 as will be explained later, and generates the prints P. The mini-laboratory 12A also records the selected image data sets S1 read from the image server 11A in a recording medium such as a CD-R or a DVD-R. Therefore, the mini-laboratory 12A comprises image processing means for carrying out image processing on the selected image data sets S1 a printer, and a media drive.

The wireless LAN communication equipment 13A is installed at locations within the service provision area of the DPE store 14. For example, the wireless LAN communication equipment 13A is installed at busy places such as a railroad station, a bus stop, a municipal office, a bank, a convenience store, a fast food restaurant, and a downtown area, or in an Internet café.

The wireless LAN communication equipment 13A may comprise Airstation WLA-L11G manufactured by MELCO INC., for example. The wireless LAN communication equipment 13A enables communication between a wired LAN and a wireless LAN, and is according to the IEEE 802.11b standard. The wireless LAN communication equipment 13A realizes wireless communication at a speed of 11 Mbps. Since the wireless LAN communication equipment 13A has been Wi-Fi (the standard for Wireless Fidelity) certified, the wireless LAN communication equipment 13A enables communication with various Wi-Fi certified products . The wireless LAN communication equipment 13A also enables communication via the wireless LAN within a range of 50m in an office having only a small number of obstacles, a range of 25m in an office having a large number of obstacles, and a range of 160m in the outside with no obstacles. Furthermore, since the wireless LAN communication equipment 13A can deal with roaming, communication can be carried out even if the user of the digital camera 2 is moving. Moreover, the wireless LAN communication equipment 13A has a multi-channel (14 channels) function for reducing a network load, and a function of MAC address registration and a security function using WEP.

A MAC address is a physical address specific to each piece of network equipment. The first 3 bytes of a MAC address represent a vender code and is assigned and managed by IEEE. The remaining 3 bytes represent a user code, and is assigned and managed by each manufacturer of the network equipment as numbers specific thereto. No two MAC addresses are the same. A unique physical address is assigned by the 6-byte data. Since each of the MAC addresses is represented by the 6-byte data, up to 1.7 million pieces of network equipment can theoretically be recognized by Wi-Fi.

For an infrastructure of the wired LAN and wireless LAN, Speed Net provided by Tokyo Electric Power Company can be used, for example. Speed Net can provide a service of data transfer at almost the same speed as an ADSL with a fixed charge therefor, by using an optical fiber network and radio antennas installed on utility poles of the company. Speed Net enables wireless LAN communication in a range of 50 ~ 300 m from each of the radio antennas. In this case, by installing the wireless LAN communication equipment 13A in a place where one of the radio antennas is located, the network printing system 1 can be configured with use of the infrastructure of Speed Net.

A communication service by using a wireless LAN provided by Mobile Internet Services Inc. (MIS) may also be used as the infrastructure for the wired and wireless LAN in this embodiment.

A cradle 17 may also be installed near any one of the pieces of the wireless LAN communication equipment 13A, that is, within the communicable range thereof, for recharging the digital camera 2 and for sending the selected image data sets to the corresponding piece of wireless LAN communication equipment 13A by reading the data from the digital camera 2. The cradle 17 comprises a terminal 17A for recharging the digital camera 2 and for reading the selected image data sets S1 from the data memory 28, and communication means 17B for communicating with the wireless LAN communication equipment 13A. The communication means 17B has authentication information storage means and addressee storage means. The cradle 17 is connected to a 100V power source in order to recharge the digital camera 2.

By using the cradle 17, even if the digital camera 2 does not have the communication chip 4, the selected image data sets S1 can be sent to the wireless LAN communication equipment 13 from the digital camera 2. Especially, in the case where the cradle 17 is located at the home of the user of the digital camera 2, and the home is within the communicable range of any one of the pieces of the wireless LAN communication equipment 13A, the selected image data sets S1 can be securely sent to the wireless LAN communication equipment 13A during a recharging operation that the user necessarily carries out. Since the recharging operation is necessary, if the selected image data sets S1 are sent during the recharging operation, the user can send the selected image data sets S1 in the recharging operation that he/she necessarily carries out daily, without carrying out a specific operation for sending the selected image data sets S1. Therefore, the user can be less burdened at the time of transfer of the selected image data sets S1.

The broadband hot spot 1B comprises an image server 11B and wireless LAN communication equipment 13B that has the same function as the wireless LAN communication equipment 13A and is connected to the image server 11B via a wired LAN. The capacity of the image server 11B is smaller than that of the image server 11A, and the image server 11B is used for temporarily storing the selected image data sets S1. The broadband hot spot 1B is also connected to the broadband town 1A via a wired LAN. The broadband hot spot 1B is installed in a location remote from the service provision area of the DPE store 14 that runs the network printing system 1. For example, if the DPE store 14 is located in Odawara, the remote location refers to a theme park such as Tokyo Disneyland or Universal Studios Japan, a sightseeing spot around Japan, a downtown area in a neighboring city, an airport, a railroad station around Japan, a fast food restaurant, or a rest area on a highway, for example.

A plurality of pieces of the wireless LAN communication equipment 13B may be used. Furthermore, the cradle 17 may also be installed near the wireless LAN communication equipment 13B, as in the case of the broadband town 1A.

The broadband satellite 1C comprises an image server 11C, a mini-laboratory 12C, and wireless communication equipment 13C that are networked via a wired LAN, and has the same function as the broadband town 1A. The capacity of the image server 11C for temporarily storing the selected image data sets S1 is smaller than that of the image server 11A. The mini-laboratory 12C generates the prints P based on the selected image data sets S1. The broadband satellite 1C is connected to the broadband town 1A via a wired LAN. The broadband satellite 1C is installed in a location away from the area wherein the DPE store 14 that runs the network printing system 1 can provide the services, as in the case of the broadband hot spot 1B.

Since the broadband satellite 1C has the mini-laboratory 12C, the prints P can be generated immediately after reception of the selected image data sets S1 at the remote location. However, the mini-laboratory 12C is smaller than the mini-laboratory 12A installed in the DPE store 14 in the broadband town 1A. Therefore, the mini-laboratory 12C can only generate a print of L size, for example. For this reason, the mini-laboratory 12C has a transfer unit 15, and the transfer unit 15 judges whether or not the orders described by the order information C can be dealt with by the mini-laboratory 12C. The prints P are generated in the mini-laboratory 12C only in the case where the orders can be dealt with by the mini-laboratory 12C. In the case where the mini-laboratory 12C cannot deal with the orders, the selected image data sets S1 and the order information C received by the broadband satellite 1C are sent from the transfer unit 15 to the DPE store 14 in the broadband town 1A where the prints P are generated.

In the broadband satellite 1C, a plurality of pieces of the wireless LAN communication equipment 13C may be used. Furthermore, as in the case of the broadband town 1A, the cradle 17 may be installed near the wireless LAN communication equipment 13C.

When the communication means 41 becomes communicable with the wireless LAN communication equipment 13A~13C by movement of the user of the digital camera 2 to the communicable range of the wireless LAN communication equipment 13A~13C, the control means 22 reads the authentication information N from the authentication information storage means 42 in the communication chip 4, and sends the authentication information N to the wireless LAN communication equipment 13A~13C so as to enable transfer of the selected image data sets S1 to the image server 11A as the addressee stored in the addressee storage means 43, via the communication means 41. The wireless LAN communication equipment 13A~13C judges whether or not the digital camera 2 which sent the authentication information N has been registered with the network printing system 1 of the DPE store 14. In the case where a result of the judgment is affirmative and the digital camera 2 has been authenticated, the control means 22 sends the selected image data sets S1 stored in the first storage area 28A of the data memory 28 to the wireless LAN communication equipment 13A~13C, together with the information on the digital camera 2 and the order information C, via the communication means 41.

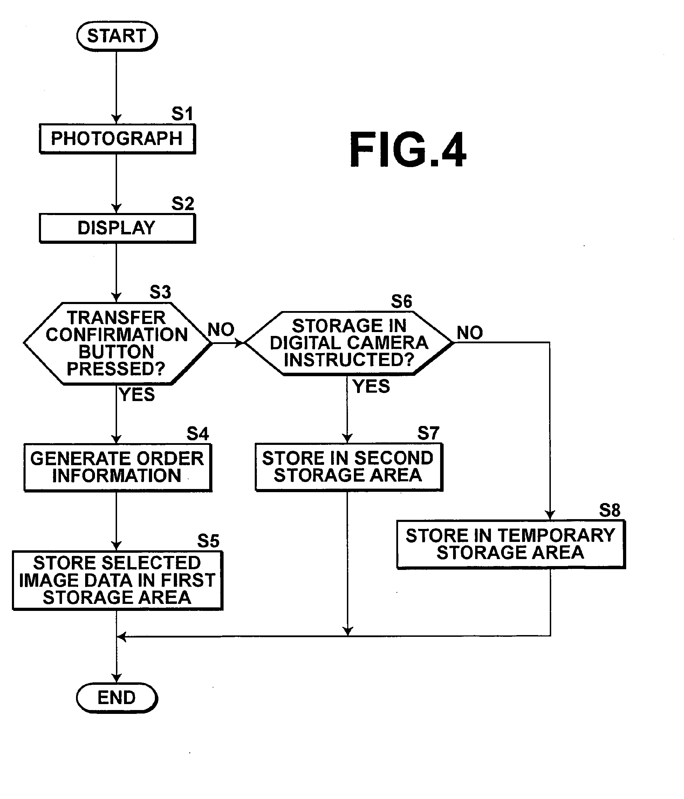

The operation of the first embodiment will be explained next. Procedures carried out in the digital camera 2 at the time of photography will be explained first. Figure 4 is a flow chart showing the procedures. The imaging means 21 photographs one of the subjects, and obtains one of the image data sets S0 that is stored in the frame memory 23 (Step S1). The image data set S0 is displayed on the display means 26 (Step S2).

Whether or not the user has pressed the transfer confirmation button 27 is then judged (Step S3). If a result at Step S3 is affirmative, the image data set S0 becomes the selected image data set S1 to be used for printing, and the order information C is generated based on the order content input by the user from the input means 24 (Step S4). The selected image data set S1 and the order information C are then stored in the first storage area 28A in the data memory 28 (Step S5) to end the process.

If the result at Step S3 is negative, whether the user has input an instruction from the input means 24 is judged for storing the image data set S0 in the digital camera 2 (Step S6). If a result at Step S6 is affirmative, the image data set S0 is stored in the second storage area 28B of the data memory 28 (Step S7) to end the process.

If the result at Step S6 is negative, it is judged that the user has not decided to print the image data set S0 or to store the image data set S0 in the digital camera 2. Therefore, the image data set S0 is stored in the temporary storage area 28C of the data memory 28 (Step S8) to end the process.

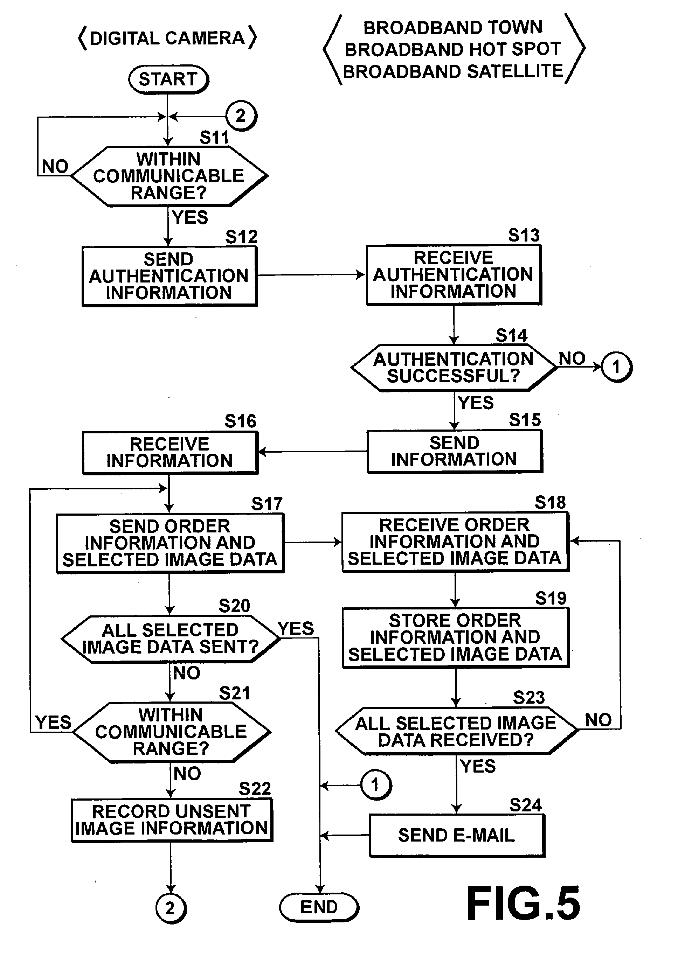

Procedures carried out at the time of sending the selected image data sets S1 from the digital camera 2 will be explained next. Figure 5 is a flow chart showing the procedures. At the time of transfer of the selected image data sets S1 from the digital camera 2, the same procedures are carried out in the broadband town 1A the broadband hot spot 1B, or in the broadband satellite 1C. Therefore, the procedures carried out at the time of sending the selected image data sets S1 from the digital camera 2 to the broadband town 1A will be explained.

In the explanations below, it is assumed that the authentication information N necessary for communication with the wireless LAN communication equipment 13A has been obtained for the digital camera 2 and stored in the authentication information storage means 42. At the same time, it is also assumed that the selected image data sets S1 and the order information C therefor have already been generated and stored in the first storage area 28A in the data memory 28. Therefore, the selected image data sets S1 are ready to be transferred.

In the digital camera 2, the control means 22 is always monitoring whether or not the communication means 41 in the communication chip 4 is within the communicable range of the wireless LAN communication equipment 13A in the broadband town 1A (Step S11). If a result at Step S11 is affirmative, the control means 22 reads the authentication information N stored in the authentication information storage means 42, and sends the authentication information N to the wireless LAN communication equipment 13A from the communication means 41 (Step S12).

If the selected image data sets S1 are sent in a state where the digital camera 2 is set on the cradle 17, the authentication information N stored in the authentication information storage means in the communication means 17B is read and sent to the wireless LAN communication equipment 13A corresponding to the cradle 17 when the user sets the communication means 41 on the cradle 17.

The authentication information N is received by the wireless LAN communication equipment 13A (Step S13). In the wireless LAN communication equipment 13A, whether or not the digital camera 2 which sent the authentication information N thereto has been registered with the network printing system 1 run by the DPE store 14, based on the authentication information N (Step S14). If a result at Step S14 is negative and the digital camera 2 was not authenticated, the communication cannot be established, and the process ends. In the case where the digital camera 2 has been authenticated and the result at Step S14 is thus affirmative, information representing the successful authentication is sent to the digital camera 2 (Step S15).

The digital camera 2 receives the information (Step S16). The control means 22 then reads the order information C and the selected image data sets S1 from the first storage area of the data memory 28, and sends the order information C and the selected image data sets S1 to the wireless LAN communication equipment 13A for transfer thereof to the URL of the addressee stored in the addressee storage means 43 (Step S17). The selected image data sets S1 are sent to the wireless LAN communication equipment 13A in ascending order of photography date, for example.

The wireless LAN communication equipment 13A receives the selected image data sets S1 and the order information C (Step S18), and carries out transfer thereof to the image server 11A according to the URL of the addressee. The selected image data sets S1 and the order information C are stored in the image server 11A (Step S19).

Meanwhile, in the digital camera 2, whether all the selected image data sets S1 stored in the first storage area 28A of the data memory 28 have been sent is judged (Step S20). If a result at Step S20 is affirmative, the process ends. The selected image data sets S1 that have been sent are deleted in order of transmission from the first storage area 28A. If the result at Step S20 is negative, whether or not the communication means 41 is within the communicable range of the wireless LAN communication equipment 13A is judged, in consideration of a possibility of the user being on the move (Step S21). If a result at Step S21 is affirmative, the process returns to Step S17 and the transmission of the selected image data sets S1 is continued. If the result at Step S21 is negative, unsent image information is generated representing the fact that some of the selected image data sets S1 have not been sent and still stored in the first storage area 28A, and the unsent image information is stored in the first storage area 28A (Step S22). The process then goes back to Step S11. When the unsent image information is generated, the user may be notified of the fact that some of the selected image data sets S1 still remain in the first storage area 28A by a sound made by beeping, for example.

The user of the digital camera 2 can confirm whether or not the unsent image information is stored in the first storage area 28A of the data memory 28. In the case of presence of the unsent image information, the user can understand the fact that not all the selected image data sets S1 have been sent. In this case, the user moves to the communicable range of the wireless LAN communication equipment 13A to send the selected image data sets S1 that have not been sent.

In the wireless LAN communication equipment 13A, whether all the selected image data sets S1 that were stored in the first storage area 28A have been received is judged (Step S23). If a result at Step S23 is affirmative, an E-mail message is sent to the digital camera 2 for notifying completion of the transmission of the selected image data sets S1 (Step S24), to end the process. If the result at Step S23 is negative, the process goes back to Step S18 for continuing reception of the selected image data sets S1.

The user can understand the fact that the selected image data sets S1 have securely been sent to the image server 11A via the broadband town 1A by viewing the E-mail message.

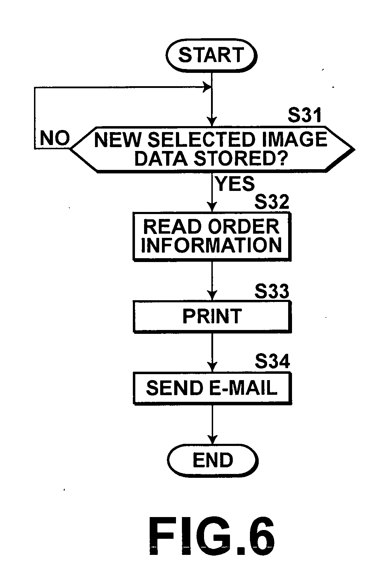

Procedures carried out in the network printing system 1 after reception of the selected image data sets S1 will be explained next. Figure 6 is a flow chart showing the procedures . In this embodiment, the user of the digital camera 2 is assumed to have described printing of the selected image data sets S1 as the content of the orders in the order information C. In the case where the selected image data sets S1 have been sent to the broadband hot spot 1B, the selected image data sets S1 are temporarily stored in the image server 11B therein, and sent to the image server 11A in the broadband town 1A, based on the URL of the addressee.

The image server 11A is regularly accessed by the mini-laboratory 12A, and the mini-laboratory 12A judges whether or not the selected image data sets S1 have been stored newly in the image server 11A (Step S31). In the case where the selected image data sets s1 have been stored newly, a result at Step S31 becomes affirmative, and the mini-laboratory 12A reads the order information C sent together with the selected image data sets S1 (Step S32).

The selected image data sets S1 are read from the image server 11A according to the content of the orders described in the order information C, and printed after necessary image processing is carried out thereon (Step S33). More specifically, the selected image data sets S1 are printed according to the size, the quantity, and the type of printing described in the order content. After completion of the printing, an E-mail message and an order reception number issued by the DPE store are sent to the user of the digital camera 2 for notifying the completion of printing (Step S34) to end the procedures.

The user knows the completion of printing of the selected image data sets S1 by viewing the E-mail message, and visits the DPE store 14 for reception of the prints P. At this time, the user is authenticated by the order reception number received together with the E-mail message, and the prints P are provided to the user. In the case where the prints P are to be delivered to a place registered in advance (such as the address of the user) according to a contract between the DPE store 14 and the user, the prints P are delivered thereto.

A printing charge may be paid directly by the user to the DPE store 14. Alternatively, since the user pays a communication charge to a wireless service provider for communication via the wireless LAN, the user may pay the printing charge to the provider so that the printing charge can be paid to the DPE store 14 via the provider. In this case, since the wireless service provider provides a discount service of its own to the user, the provider can provide a further discount service via the DPE store 14, such as discounting the communication charge in accordance with the use of the DPE store 14.

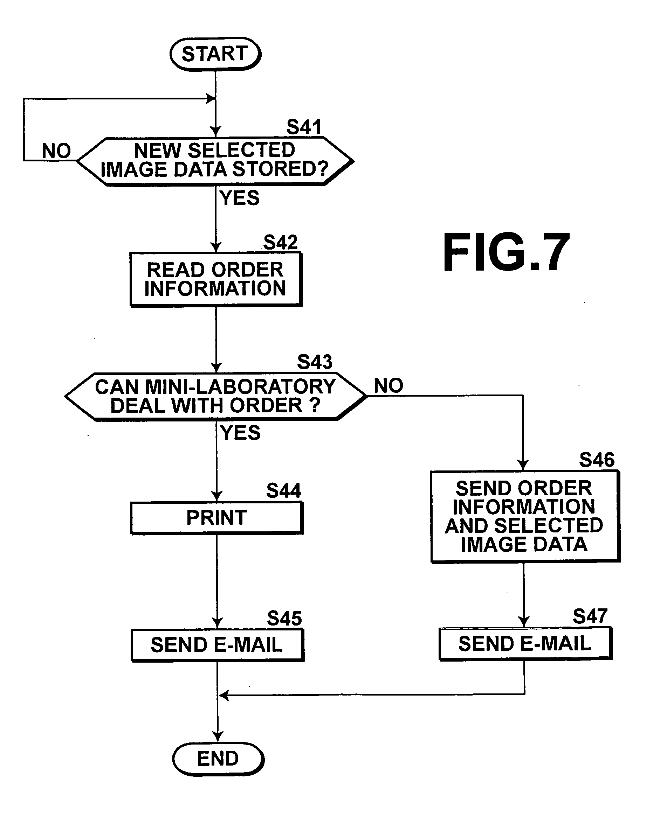

Figure 7 is a flow chart showing procedures carried out after the selected image data sets S1 are received by the broadband satellite 1C. The user is again assumed to have described printing of the selected image data sets S1 as the content of. the orders in the order information C.

The case where the user sends the selected image data sets S1 to the broadband satellite 1C refers to the case where the user is in the place where the broadband satellite 1C is located. Therefore, before the user visits the place, the user stores the URL of the image server 11C of the broadband satellite 1C in the addressee storage means 43. By selecting the image server 11C in the broadband satellite 1C as the addressee of the selected image data sets S1 the selected image data sets S1 are sent to and stored in the image server 11C. The user can select the addressee by displaying the addressee on the display means 26 and then selecting the addressee with use of the input means 24.

The mini-laboratory 12C regularly accesses the image server 11C, and judges whether or not the selected image data sets S1 have newly been stored in the image server 11C (Step S41). In the case where the selected image data sets S1 have been stored newly and a result at Step S41 is thus affirmative, the mini-laboratory 12C reads the order information C received together with the selected image data sets S1 (Step S42).

The transfer unit 15 judges whether or not the content of the orders described in the order information C can be dealt with by the mini-laboratory 12C (Step S43). If a result at Step S43 is affirmative, the selected image data sets S1 are read from the image server 11C and printed after necessary image processing is carried out thereon, based on the content of the orders described in the order information C (Step S44). More specifically, the selected image data sets S1 are printed according to the size, the quantity, and the type of printing described in the content of the orders. After completion of the printing, an E-mail message notifying the completion of printing is sent to the user of the digital camera 2 together with a reception number issued by the broadband satellite 1C (Step S45) to end the process.

The user of the digital camera 2 knows the completion of printing of the selected image data sets S1 he/she sent, by viewing the E-mail message. The user then visits the broadband satellite 1C to receive the prints P. At this time, the user is authenticated by the reception number sent together with the E-mail message, and the user can receive the prints P. In the case where the prints P are to be delivered to the user according to the contract between the user and the DPE store 14, the prints P are delivered to the place (the address of the user, for example) that has been registered in advance.

Since the broadband satellite 1C is installed in a theme park or the like where the user visits, the user can obtain the prints P generated from the selected image data sets S1 immediately at the place.

If the result at Step S43 is negative, the order cannot be dealt with by the mini-laboratory 12C. Therefore, the transfer unit 15 sends the selected image data sets S1 and the order information C to the image server 11A of the DPE store 14 (Step S46). An E-mail message is sent to the user for notifying the user of the fact that the printing is carried out by the DPE store 14 regarding the selected image data sets S1 sent by the user (Step S47), to end the process.

The user knows that the printing is carried out by the DPE store 14 by viewing the message.

As has been described above, according to this embodiment, the image data sets S0 whose printing has been decided by the user are stored as the selected image data sets S1 in the first storage area 28A of the data memory 28 in the digital camera 2. Therefore, the user can easily select the image data sets S0 to be printed after photography thereof, and can easily confirm which of the image data sets S0 are to be printed, at the time of image confirmation thereafter.

After the digital camera 2 is authenticated by data communication between the communication means 41 and the wireless LAN communication equipment 13A~13C, the selected image data sets S1 are sent to the URL of the image server 11A stored in the addressee storage means 43 via the wireless LAN communication equipment 13A~13C. Therefore, the selected image data sets S1 whose printing has been decided by the user can be sent to the image server 11A if the user simply moves to the communicable range of the wireless LAN communication equipment 13A~13C with the digital camera 2. Consequently, if the user only selects the image data sets S1 with use of the transfer confirmation button 27 after photographing scenes he/she wished to record or was moved by, the selected image data sets S1 can be sent to the image server 11A after the user simply moves to the communicable range of the wireless LAN communication equipment 13A~13C. The prints P are then generated based on the selected image data sets S1. In this manner, the user can obtain the prints P that reminds him/her of an impression at the time of photography, without carrying out a troublesome operation such as selection from a plurality of images.

By installing the communication means 41, the authentication information storage means 42, and the addressee storage means 43 in the communication chip 4 that is detachable from the digital camera 2, the selected image data sets S1 can be sent through communication with the wireless LAN communication equipment 13A~13C if the communication chip 4 is simply connected to the communication interface 29. Furthermore, a plurality of digital cameras can be used with the communication chip 4.

The communication chip 4 may have the communication means 41 alone. In this case, the digital camera 2 has the authentication information storage means 42 and the addressee storage means 43.

By putting the cradle 17 near the wireless LAN communication equipment 13A and by recharging the digital camera 2 while transmitting the selected image data sets S1 with use of the cradle 17, the selected image data sets S1 can be sent to the network printing system 1 even if the digital camera 2 does not have the communication chip 4 for communicating with the wireless LAN communication equipment 13A.

By sending the selected image data sets S1 from the cradle 17 having the recharging function, the selected image data sets S1 can be sent securely during a recharging operation that is necessarily carried out for using the digital camera 2.

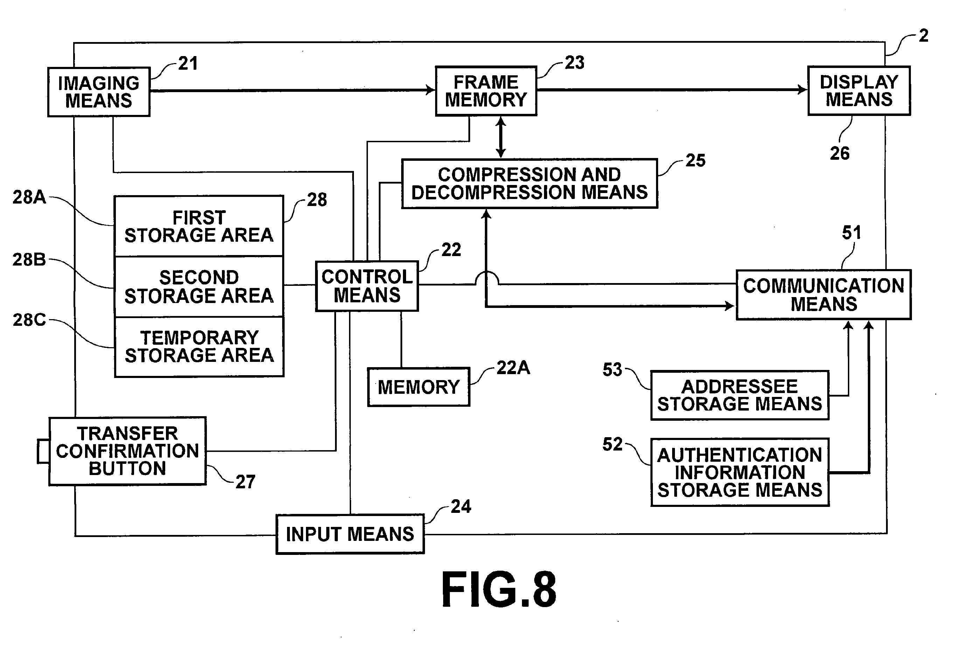

A second embodiment of the present invention will be explained next. Figure 8 is a block diagram showing a configuration of a digital camera adopting an imaging apparatus of the second embodiment of the present invention. In the second embodiment, the same elements as in the first embodiment have the same reference numbers, and detailed explanations thereof will be omitted. In the first embodiment, the communication chip 4 is connected to the communication interface 29 for sending the selected image data sets S1. In the second embodiment, communication means 51, authentication information storage means 52, and addressee storage means 53 corresponding to the communication means 41, the authentication information storage means 42, and the addressee storage means 43 in the communication chip 4 in the first embodiment are installed in the digital camera 2.

By installing the communication means 51, the authentication information storage means 52, and the addressee storage means 53 in the digital camera 2, the selected image data sets S1 stored in the first storage area 28A of the data memory 28 can be sent to the image server 11A via the wireless LAN communication equipment 13A~13C, as in the first embodiment.

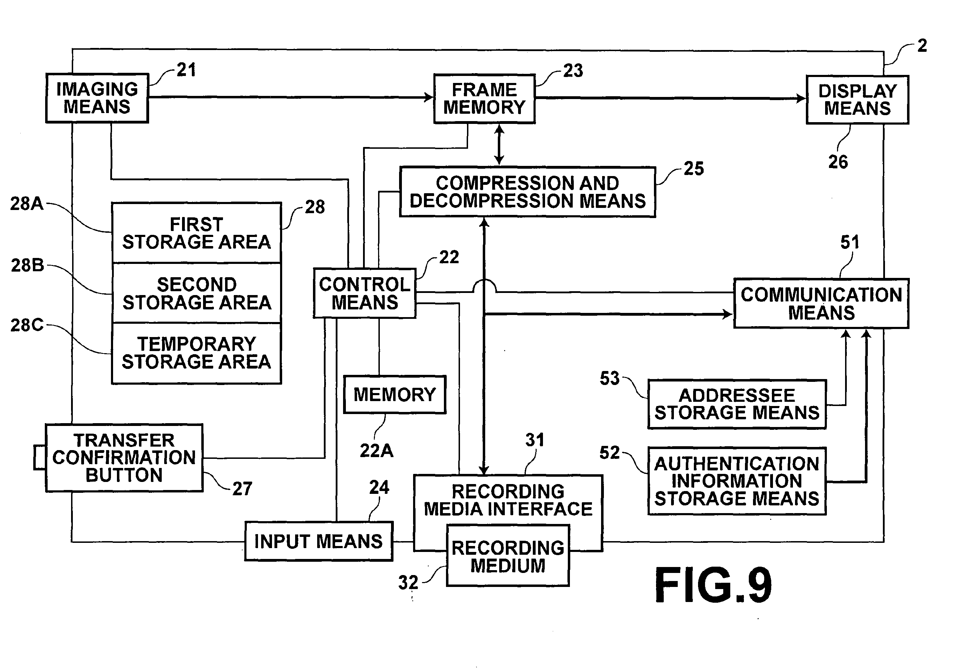

A third embodiment of the present invention will be explained next. Figure 9 is a block diagram showing a configuration of a digital camera adopting an imaging apparatus of the third embodiment of the present invention. In the third embodiment, the same elements as in the first and second embodiments have the same reference numbers, and detailed explanations thereof will be omitted. In the second embodiment, the image data sets S0 whose printing is not ordered by the user are stored in the second storage area 28B of the data memory 28. In the third embodiment, the image data sets S0 are recorded in a recording medium 32 that is detachable from the digital camera 2. Therefore, in the third embodiment, a recording media interface 31 is used for data conversion for reading or recording the image data set S0 in and from the recording medium 32.

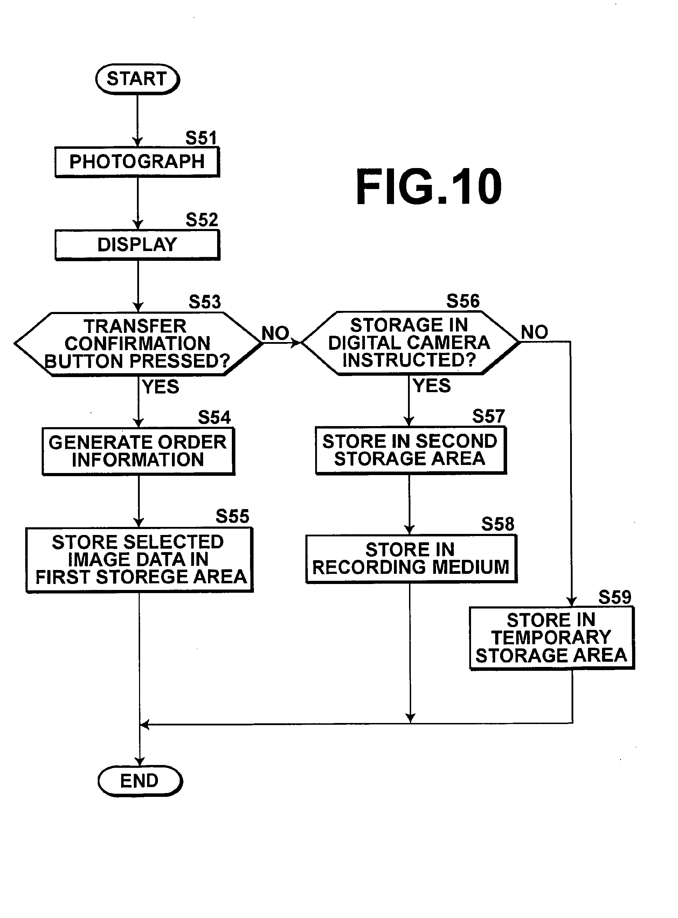

Procedures carried out in the third embodiment will be explained next. Figure 10 is a flow chart showing the procedures carried out in the digital camera 2 at the time of photography. The imaging means 21 photographs a subject to obtain the image data set S0. The image data set S0 is stored in the frame memory 23 (Step S51), and displayed on the display means 26 (Step S52).

Whether or not the user has pressed the transfer confirmation button 27 is then judged (Step S53). If a result at Step S53 is affirmative, the image data set S0 becomes the selected image data set S1 to be printed, and the order information C describing the content of a printing order is generated based on an input by the user from the input means 24 (Step S54). The selected image data set S1 and the order information C are stored in the first storage area 28A of the data memory 28 (Step S55) to end the process.

If the result at Step S53 is negative, whether or not the user has input his/her intension of storing the image data set S0 in the digital camera 2 from the input means 24 is judged (Step S56). If a result at Step S56 is affirmative, the image data set S0 obtained by the user is stored in the second storage area 28B of the data memory 28 (Step S57). The image data set S0 stored in the second storage area 28B is recorded in the recording medium 32 via the recording media interface 31 after a predetermined time has elapsed (Step S58), and the process ends.

If the result at Step S56 is negative, it is judged that the user has not decided to store the image data set S0 in the digital camera 2 or to use the image data set S0 for printing, and the image data set S0 is stored in the temporary storage area 28C in the data memory 28 (Step S59) to end the process.

As in the first embodiment, when the user moves to the communicable range of the wireless LAN communication equipment 13A~13C, the selected image data sets S1 stored in the first storage area 28A of the data memory 28 are sent to the image server 11A as the addressee, via the wireless LAN communication equipment 13A~13C.

In the third embodiment, the image data sets S0 stored in the second storage area 28B are recorded in the recording medium 32 by the recording media interface 31. Likewise, the digital camera 2 in the first embodiment may have the recording media interface 31 as in the third embodiment so that the image data sets S0 stored in the second storage area 28B are recorded in the recording medium 32.

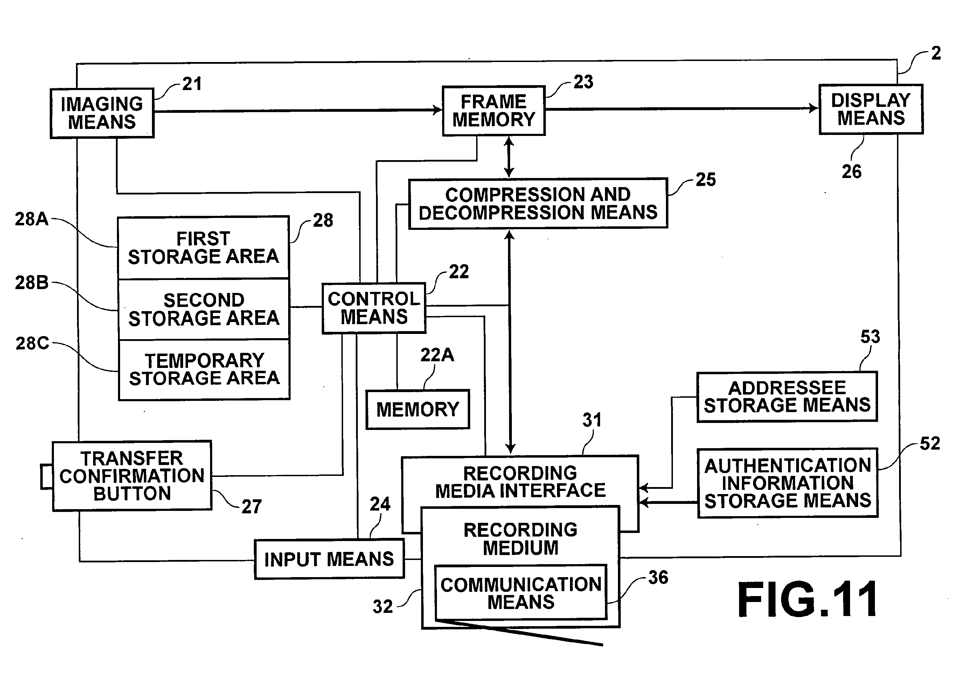

A fourth embodiment of the present invention will be explained next. Figure 11 is a block diagram showing a configuration of a digital camera adopting an imaging apparatus of the fourth embodiment of the present invention. In the fourth embodiment, the same elements as in the first to third embodiments have the same reference numbers, and detailed explanations thereof will be omitted. In the digital camera 2 in the fourth embodiment, communication means 36 having the same function as the communication means 51 is installed in the recording medium 32.

In the fourth embodiment, the DPE store 14 that runs the network printing system 1 installs in the recording medium 32 the communication means 36 that is communicable only with the wireless LAN communication equipment 13A~13C. If the DPE store 14 provides the user of the digital camera 2 with the recording medium 32 having the communication means 36 therein, the selected image data sets S1 to be used for printing are sent only to the network printing system 1. Therefore, the DPE store 14 can easily induce the user to become a customer thereof, which leads to an increase in the profit thereof.

In the fourth embodiment, the authentication information storage means 52 and the addressee storage means 53 are installed in the digital camera 2, which may be installed in either the recording medium 32 or the communication means 36.

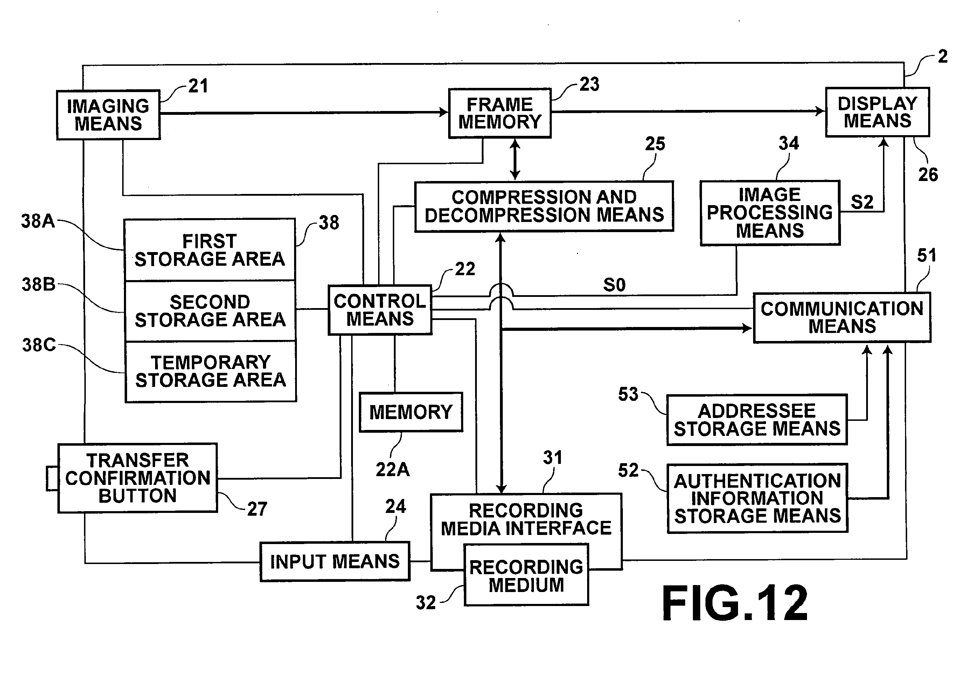

A fifth embodiment of the present invention will be explained next. Figure 12 is a block diagram showing a configuration of a digital camera adopting an imaging apparatus of the fifth embodiment of the present invention. In the fifth embodiment, the same elements as in the first to fourth embodiments described above have the same reference numbers, and detailed explanations thereof will be omitted. The digital camera 2 in the fifth embodiment has image processing means 34 for obtaining processed image data sets S2 by carrying out image processing on the image data sets S0 and a data memory 38 corresponding to the data memory 28.

The digital camera 2 in the fifth embodiment can obtain not only still image data sets but also moving image data sets. Therefore, in the fifth embodiment, the image data sets S0 obtained by the digital camera 2 includes moving image data sets.

The data memory 38 comprises a first storage area 38A for storing the selected image data sets S1, a second storage area 38B for storing the image data sets S when the user has not decided to store the image data sets S0 in the digital camera 2 or to use for printing, and a temporary storage area 38C for temporarily storing the image data sets S0 after photography.

The image data sets S0 are stored in the temporary storage area 38C after photography. When the image data sets are classified into the selected image data sets S1 and the remaining image data sets S0, the selected image data sets S1 determined with use of the transfer button 27 are stored in the first storage area 38A. The image data sets S0 whose printing or storage has not been decided by the user are stored in the second storage area 38B. The user inputs an instruction from the input means 24 for storing the image data sets S0 in the second storage area 38B.

When a free space in the first storage area 38A becomes small, a sound made by beeping or the like is preferably used for warning. The capacity of each of the storage areas 38A~38C may be changeable by an instruction from the user via the input means 24.

The image data sets S0 are stored in the recording medium 32 when the space of the second storage area 38B becomes almost fully occupied. In this case, a warning may be issued with use of a sound made by beeping or the like, for notifying the fact, and the image data sets S0 are stored in the recording medium 32 thereafter. Alternatively, the image data sets S0 may be stored in the recording medium 32 by an instruction from the user using the input means 24.

The image processing means 34 carries out, on the image data sets S0 stored in the second storage area 38B, image processing which is the same as the image processing carried out on the selected image data sets S1 by the network printing system 1, and obtains the processed image data sets S2. The image processing is carries out according to an instruction from the user with use of the input means 24.

The processed image data sets S2 are displayed on the display means 26. The user views the processed image data sets S2 and judges the finish thereof. In the case where the user places a printing order regarding any one of the processed image data sets S2, the user presses the transfer confirmation button 27, and the image data set S0 from which the processed image data set S2 was obtained is stored in the first storage area 38A as the selected image data set S1.

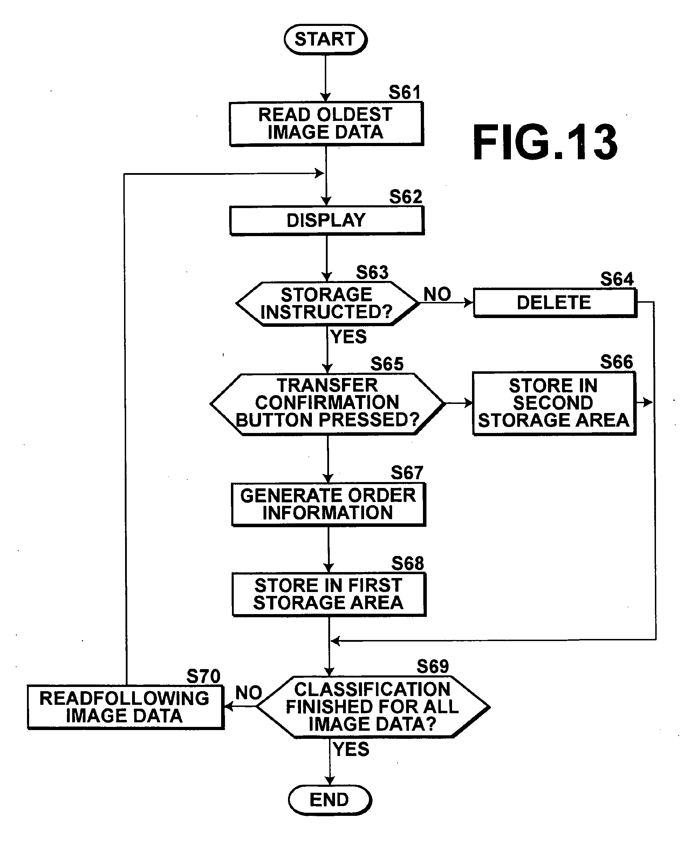

The operation of the fifth embodiment will be explained next. How the image data sets S0 are classified in the digital camera 2 after photography will be explained first. Figure 13 is a flow chart showing procedures for classifying the image data sets S0. The image data sets S0 that have been obtained by photography are first stored in the temporary storage area 38C in the data memory 38.

The image data set S0 having the oldest date of photography is read from the temporary storage area 38A by an instruction from the input means 24 (Step S61), and displayed on the display means 26 (Step S62). Whether or not the user has instructed storage of the image data set S0 in the digital camera 2 is then judged (Step S63). If a result at Step S63 is negative, the image data set S0 being displayed is deleted from the temporary storage area 38C (Step S64), and the process goes to Step S69.

If the result at Step S63 is affirmative, whether or not the user has pressed the transfer confirmation button 27 is judged (Step S65). If a result at Step S65 is negative, the image data set S0 is stored in the second storage area 38B of the data memory 38 (Step S66), and the process goes to Step S69.

If the result at Step S65 is affirmative, the image data set S0 becomes the selected image data set S1 to be used for printing, and the order information C is generated according to the content of an order input by the user from the input means 24 (Step S67). The selected image data set S1 is stored in the first storage area 38A of the data memory 38 together with the order information C (Step S68).

Whether or not the classification has been carried out for all the image data sets S0 stored in the temporary storage area 38C is then judged (Step S69). If a result at Step S69 is affirmative, the process ends. If the result at Step S69 is negative, the following one of the image data sets S0 is read from the temporary storage area 38C (Step S70), and the process goes back to Step S62. Thereafter, the procedures from Step S62 are carried out.

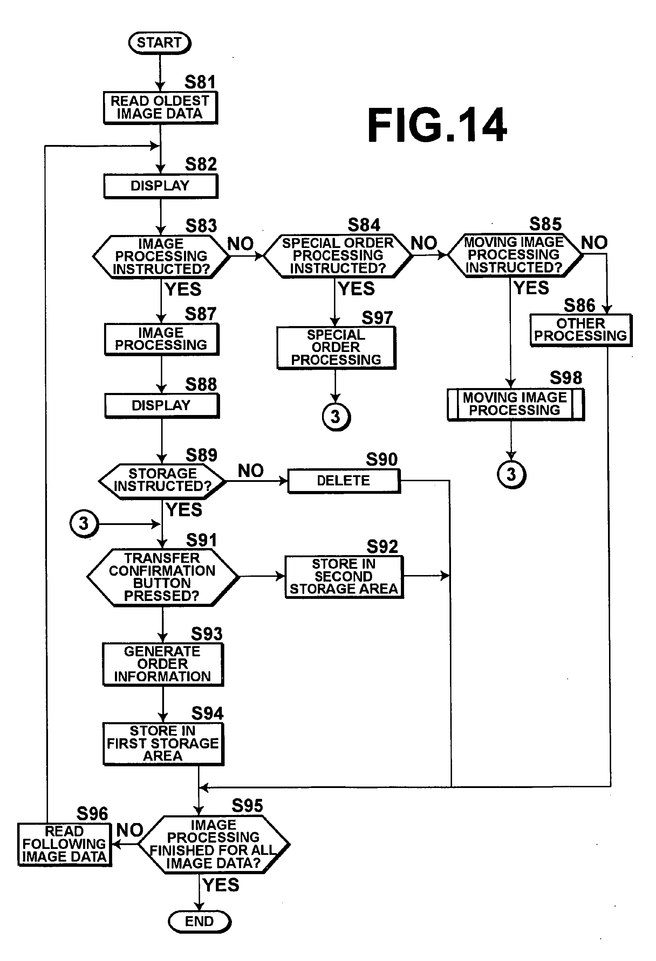

Procedures carried out on the image data sets S0 stored in the second storage area 38B will be explained next. Figure 14 is a flow chart showing the procedures. The image data set S0 having the oldest date of photography is read from the second storage area 38B (Step S81), and displayed on the display means 26 (Step S82). Whether or not the user has instructed image processing by the image processing means 34 is judged regarding the displayed image data set S0 (Step S83). If a result at Step S83 is negative, whether or not special order processing has been instructed for the image data set S0 is then judged (Step S84). If a result at Step S84 is negative, whether or not moving image processing on the image data set S0 has been instructed is judged (Step S85). If a result at Step S85 is negative, it is judged that other processing has been instructed. The other processing is then carried out on the image data set S0 (Step S86) and the process goes to Step S95.

If the result at Step S83 is affirmative, the image processing means 34 carries out image processing on the image data set S0 and the processed image data set S2 is obtained (Step S87). The processed image data set S2 is displayed on the display means 26, instead of the image data set S0 before the image processing (Step S88). Whether or not the user has instructed storage of the image data set S0 from which the processed image data set S2 was generated is judged (Step S89). If a result at Step S89 is negative, the image data set S0 is judged to be unnecessary, and the image data set S0 is deleted from the second storage area 38B (Step S90). The process then goes to Step S95.

If the result at Step S89 is affirmative, whether or not the user has pressed the transfer confirmation button 27 is then judged (Step S91). If a result at Step S91 is negative, the image data set S0 is stored again in the second storage area 38B in the data memory 38 (Step S92), and the process goes to Step S95.

If the result at Step S91 is affirmative, the image data set S0 becomes the selected image data set S1 to be used for printing, and the order information C is generated according to the content of the order input by the user from the input means 24 (Step S93). The selected image data set S1 is stored in the first storage area 38A in the data memory 38, together with the order information C (Step S94). Whether or not the process has been carried out for all the image data sets S0 that were once stored in the second storage area 38B is then judged (Step S95). If a result at Step S95 is affirmative, the process ends. If the result at Step S95 is negative, the following image data set S0 is read from the second storage area 38B (Step S96), and the process goes back to Step S82. The procedures from Step S82 are then carried out.

As has been described above, the processed image data sets S2 are obtained by carrying out image processing on the image data sets S0 stored in the second storage area 38B. At the time of display of the processed image data sets S2, if the user presses the transfer confirmation button 27 for any one of the image data sets S0 to be used for printing, the image data set S0 is stored as the selected image data set S0 in the first storage area 38A. Therefore, if the user does not wish to print the image data set S0 immediately after photography but changed his/her mind for the image data set S0 the image data set S0 can be used as the selected image data set S1 for printing.

If the result at Step S84 is affirmative, the special order processing is carried out on the image data set S0 being displayed (Step S97). The special order processing is used for printing the image data set S0 after some manipulation such as trimming or generation of a calendar or picture postcard using the image data set S0 has been carried out thereon. Since the special order processing is used for printing, the process goes to Step S91 after the special order processing has been carried out, and the procedures from Step S91 are carried out thereafter.

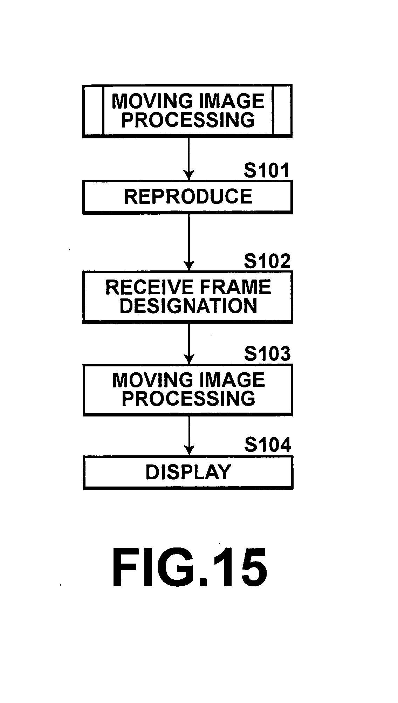

If the result at Step S85 is affirmative, the image data set S0 is assumed to be a moving image data set, and the moving image processing is carried out (Step S98). Figure 15 is a flow chart showing procedures for the moving image processing. The image data set S0 (the moving image data set) is reproduced on the display means 26 (Step S101), and the user designates a frame to be printed (Step S102). The moving image processing is carried out on an image data set representing the designated frame (Step S103). Since a moving image has fewer pixels than a still image, processing for changing to coarser graininess than that of a still image is carried out as the moving image processing. Furthermore, since a moving image does not have enough brightness in many cases, processing for changing to a lighter scene is also carried out.

The image data set after the moving image processing is displayed on the displaymeans 26 (Step S104). Since the moving image processing is used for printing, the procedures from Step S91 are carried out thereafter. The image data set stored in the second storage area 38B at Step S92 and the image data set stored in the first storage area 38A at Step S94 are the image data sets representing the frame designated at Step S102.

In the fifth embodiment, the same procedures are carried out as in the first embodiment, as the procedures carried out at the time of sending the selected image data sets S1 from the digital camera 2, the procedures carried out in the broadband town 1A after reception of the selected image data sets S1 and the procedures carried out in the broadband satellite 1C after reception of the selected image data sets S1.

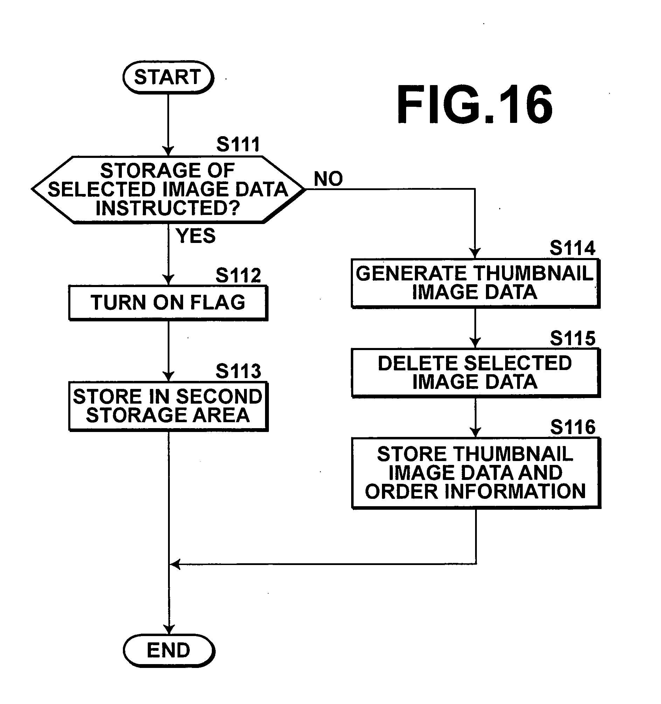

Procedures carried out in the digital camera 2 in the fifth embodiment after transmission of the selected image data sets S1 will be explained next. Figure 16 is a flow chart showing the procedures. Whether or not the user has input an instruction for storing the selected image data sets S1 in the digital camera 2 from the input means 24 is judged (Step S111). If a result at Step S111 is affirmative, a flag indicating that printing has been ordered is turned on and added to the selected image data sets S1 (Step S112), and the selected image data sets added with the flag are stored in the first storage area 38A of the data memory 38 (Step S113) to end the process. The selected image data sets S1 added with the flag may be stored in the first storage area 38A as they are. Alternatively, a storage area may be generated in the data memory 38 so that the selected image data sets S1 added with the flag can be moved from the first storage area and stored therein.

If the result at Step S111 is negative, the control means 22 generates thumbnail image data sets from the selected image data sets S1 (Step S114). The selected image data sets S1 are then deleted from the first storage area 38A (Step S115), and the thumbnail image data sets and the order information C are stored in the data memory 38 (Step S116) to end the process. The thumbnail image data sets and the order information C may be stored in either the first storage area 38A or the second storage area 38B. Alternatively, a new storage area may be generated in the data memory 38 so that the thumbnail image data sets and the order information C are stored therein.

As has been described above, according to the fifth embodiment, the image data sets S0 whose printing has been determined by the user are stored in the first storage area 38A as the selected image data sets S1, and the remaining image data sets S0 are stored in the second storage area 38B in the digital camera 2. Therefore, if the user selects the image data sets S0 to be printed after photography thereof, the selected image data sets S1 are read from the first storage area 38A and sent to the network printing system 1. Consequently, the user of the digital camera 2 can place a printing order for generating the prints P by simply selecting the image data sets S0 to be printed, and easily obtains the prints P.

By deleting the selected image data sets S1 from the first storage area 38A after transfer thereof, the space of the first storage area can be saved, and more selected image data sets S1 can be stored therein.

By storing the thumbnail image data sets in the data memory 38 instead of the selected image data sets S1, the selected image data sets S1 used for printing can be easily confirmed with reference to the thumbnail image data sets, even if the selected image data sets S1 have been deleted from the first storage area 38A.

By storing the order information C in the data memory 38 together with the thumbnail image data sets, the order content can be confirmed easily even if the selected image data sets S1 have been sent.

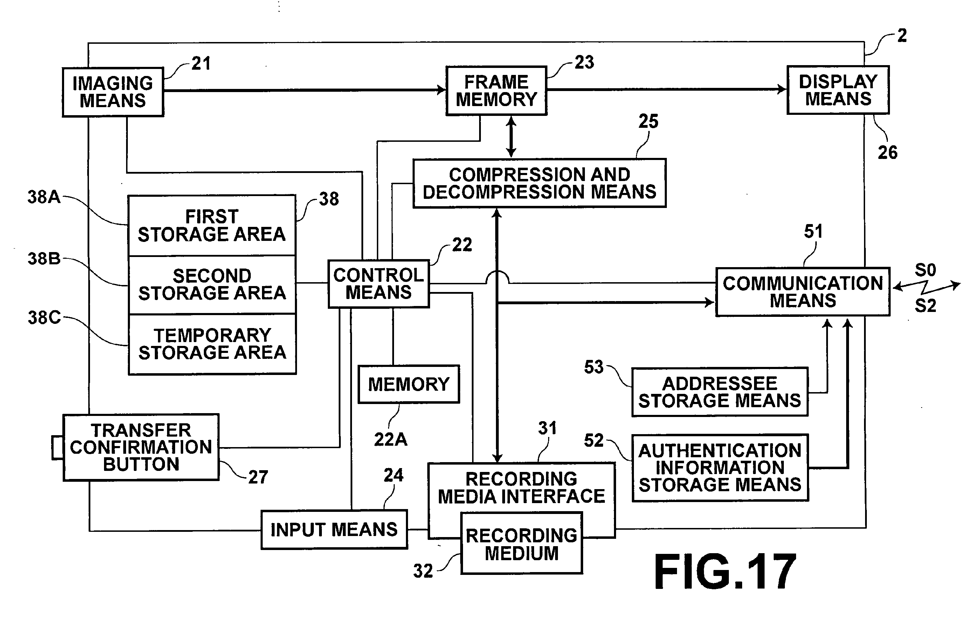

A sixth embodiment of the present invention will be explained next. Figure 17 is a block diagram showing a configuration of a digital camera adopting an imaging apparatus of the sixth embodiment of the present invention. In the sixth embodiment, the same elements as in the fifth embodiment have the same reference numbers, and detailed explanations thereof will be omitted. In the fifth embodiment, the image processing means 34 in the digital camera 2 carries out image processing on the image data sets S0 stored in the second storage area 38B, and obtains the processed image data sets S2. In the sixth embodiment, the image data sets S0 stored in the second storage area 38B are sent to the network printing system 1, and the processed image data sets S2 are obtained in the mini-laboratory 12A after the image processing is carried out thereon. The processed image data sets S2 are received by the communication means 51 and displayed on the display means 26.

By carrying out the image processing on the image data sets S0 in the mini-laboratory 12A, the digital camera 2 does not need to have the image processing means 34. Therefore, the configuration of the digital camera 2 becomes simpler.

In the fifth and sixth embodiments, the thumbnail image data sets are generated from the selected image data sets S1 after transmission thereof, and stored in the data memory 38 together with the order information C. However, only either the thumbnail image data sets or the order information C may be stored in the data memory 38. Alternatively, the user may instruct storage or deletion of the thumbnail image data sets and the order information C in the data memory 38.

In the fifth and sixth embodiments, the selected image data sets S1 may be viewed after transmission thereof, by accessing the image server 11A from the digital camera 2. In this case, the special order processing may be carried out in the digital camera 2 on the selected image data sets S1, and the image data sets S1 after the special order processing may be sent to the image server 11A.

## Claims

1. An imaging apparatus comprising:
image capturing means for obtaining image data;
image selection means for selecting a desired portion of the image data to be sent to an addressee that generates printed matter therefrom; and
image storage means for storing the image data obtained by the imaging means and the portion of the image data selected by the image selection means as selected image data.

2. An imaging apparatus as defined in Claim 1, further comprising:
communication means for carrying out data communication with wireless communication equipment;
addressee storage means for storing the addressee;
authentication information storage means for storing authentication information that is necessary for the data communication with the wireless communication equipment; and
control means for carrying out judgment as to whether or not the communication means is within a communicable range of the wireless communication equipment and for controlling the communication means so as to send the authentication information stored in the authentication information storage means to the wireless communication equipment by carrying out the data communication with the wireless communication equipment in the case where a result of the judgment is affirmative and so as to send the selected image data to the addressee via the wireless communication equipment after the wireless communication equipment authenticates the imaging apparatus according to the authentication information.

3. An imaging apparatus as defined in Claim 2, wherein at least the communication means is installed in a dedicated chip that is detachable from the imaging apparatus.

4. A data communication apparatus connected to an imaging apparatus defined in Claim 1 for sending the selected image data to the addressee by reading the selected image data from the image storage means, the data communication apparatus comprising:
communication means for carrying out data communication with wireless communication equipment;
addressee storage means for storing the addressee;
authentication information storage means for storing authentication information that is necessary for carrying out the data communication with the wireless communication equipment; and
control means for controlling the communication means so as to send the authentication information stored in the authentication information storage means to the wireless communication equipment by carrying out the data communication with the wireless LAN communication equipment and so as to send the selected image data to the addressee via the wireless communication equipment after the wireless communication equipment authenticates the data communication apparatus according to the authentication information.

5. A data communication apparatus as defined in Claim 4, further comprising recharging means for recharging the imaging apparatus.

6. An imaging apparatus comprising:
image capturing means for obtaining image data;
image selection means for selecting a desired portion of the image data as selected image data for generating printed matter therefrom;
image storage means comprising a first storage area for storing the selected image data and a second storage area for storing the remaining image data; and
image output means for outputting the selected image data to an external apparatus that generates the printed matter, by reading the selected image data from the first storage area.

7. An imaging apparatus as defined in Claim 6, further comprising:
image processing means for obtaining processed image data by carrying out image processing on the remaining image data stored in the second storage area of the image storage means, wherein
the image selection means receives selection as the selected image data from the remaining image data from which the processed image data have been generated.

8. An imaging apparatus defined in Claim 6, further comprising:
communication means for sending the remaining image data stored in the second storage area in the image storage means to external image processing means that obtains processed image data by carrying out image processing on the image data, and for receiving the processed image data, wherein
the image selection means receives selection as the selected image data from the remaining image data from which the processed image data have been generated.

9. An imaging apparatus as defined in any one of Claims 6 to 8, wherein the image output means is also means for deleting the selected image data from the first storage area in the image storage means after outputting the selected image data.

10. An imaging apparatus as defined in Claim 9, further comprising thumbnail image generation means for generating thumbnail image data of the selected image data and for storing the thumbnail image data in the image storage means.

11. An imaging apparatus as defined in any one of Claims 6 to 10, further comprising:
order information generation means for generating order information representing the content of an order regarding the selected image data, wherein
the image output means is means for outputting the order information together with the selected image data.

12. An imaging apparatus defined in Claim 11, further comprising order information storage means for storing the order information after the selected image data have been sent.

13. An imaging apparatus comprising:
image capturing means for obtaining image data;
image selection means for selecting a desired portion of the image data as selected image data for generating printed matter therefrom;
image storage means comprising a first storage area for storing the selected image data and a second storage area for storing the remaining image data;
image output means for outputting the selected image data to an external apparatus that generates the printed matter, by reading the selected image data from the first storage area; and
control means for carrying out judgment as to whether or not the communication means is within a communicable range of the wireless communication equipment and for controlling the image output means so as to have the same send the selected image data to the external apparatus that generates the printed matter when it is judged by the control means that the communication means is within the communicable range of the wireless communication equipment.

14. An imaging apparatus comprising:
a camera housing,
an image capturing system provided in the housing for obtaining image data;
a manually operable print order button provided on the camera body for selecting a desired portion of the image data to be sent to an addressee that generates printed matter therefrom; and
an image output system provided in the camera body for outputting the selected image data to the addressee that generates the printed matter.
